# EUROPÄISCHE PATENTSCHRIFT

(11) **EP 3 044 140 B1**
(45) Veröffentlichungstag und Bekanntmachung des Hinweises auf die Patenterteilung: **28.06.2017**
(21) Anmeldenummer: 14759128.3
(22) Anmeldetag: 28.08.2014
(51) Int. Cl.: B65G 47/96, B07C 5/00

(54) **QUERBANDSORTERTRANSPORTELEMENT UND ENTSPRECHENDES VERFAHREN**
CROSS-BELT SORTER TRANSPORT ELEMENT AND CORRESPONDING METHOD
ÉLÉMENT TRANSPORTEUR POUR DISPOSITIF DE TRI À BANDE TRANSVERSALE ET PROCÉDÉ CORREPONDANT

(30) Priorität: 13.09.2013 DE 102013218376
(43) Veröffentlichungstag der Anmeldung: 20.07.2016
(73) Patentinhaber: Siemens Aktiengesellschaft, 80333 München (DE)
(72) Erfinder: ENENKEL, Peter, 78462 Konstanz (DE)
(74) Vertreter: Maier, Daniel Oliver
(86) Internationale Anmeldenummer: PCT/EP2014/068273
(87) Internationale Veröffentlichungsnummer: WO 2015/036255

(56) Entgegenhaltungen:
- BE-A- 723 966
- DE-C- 942 498
- DE-U1- 20 202 216
- DE-U1-202008 009 280
- DE-U1-202011 106 265

## Beschreibung

Die Erfindung betrifft ein Querbandsortertransportelement für einen Querbandsorter sowie ein Verfahren zum Ein- und/oder Ausschleusen von Stückgut in ein bzw. aus einem solchen Querbandsortertransportelement.

Sortiersysteme identifizieren in ungeordneter Reihenfolge ankommendes, heterogen geformtes und vereinzeltes Stückgut, beispielsweise Pakete (in Postämtern), Gepäckstücke (auf Flughäfen) oder Kommissionsware (in Versandhäusern), aufgrund vorgegebener Unterscheidungskriterien und verteilen sie auf festgelegte Ziele.

Solche Sortiersysteme bestehen aus Sortieranlagen, die mit entsprechenden organisatorischen Abläufen und angepassten Betriebsstrategien, welche in zugehörigen Steuerungen bei den Sortieranlagen bzw. Sortiersystemen implementiert sind, die Systemfunktionalität der Sortiersysteme gewährleisten.

Die Sortieranlage stellt dabei den technischen Teil des Sortiersystems dar und besteht aus einem oder mehreren Sortern, welcher bzw. welche die Verteilung des Stückgutes auf die Ziele realisiert bzw. realisieren, sowie vor- und nachgeschalteten Funktionsbereichen, wie Zu- und Abförderungen des Stückgutes.

Ein solcher Sorter selbst besteht aus einer Einschleusung, einem Verteilförderer und End-/Zielstellen für das zu verteilende Stückgut.

Sorter erreichen je nach Stückgutgewicht Sortierleistungen von Stückgut bis über 15.000 Stück/h. Übliche Maximalgewichte von Stückgut liegen bei ca. 20 kg bis 60 kg, bei einzelnen Sortiersystemen auch bis zu 150 kg.

Durch parallel oder matrixartig verbundene Sorter bei Sortieranlagen können Sortiersysteme auch Sortierleistungen bis über 200.000 Stück/h erreichen.

Wachsenden und/oder wechselnden Anforderungen an Sortiersysteme, wie insbesondere hohe Sortierleistungen und/oder unterschiedliches Stückgut, stehen vielfältige Bauformen der Verteilförderer gegenüber.

Bei technikorientierter Klassifizierung von Verteilförderern nach den Kriterien Belegungsart, Wirkprinzip einer Ausschleusung des Stückgutes und fördertechnisches Prinzip können insbesondere Verteilförderer mit einer Quergurt- bzw. Querbandtechnologie und einer Kippschalentechnologie, kurz Quergurtförderer bzw. Querbandsorter und Kippschalenförderer, unterschieden werden.

Ein Quergurtförderer bzw. Querbandsorter, im Folgenden nur als Querbandsorter bezeichnet, ist aus
http://de.wikipedia.org/wiki/Quergurtsorter (erhältlich am 27.08.2013) bekannt.

Ein Fördermittel bei dem Querbandsorter besteht aus einzelnen gelenkig zu einer geschlossenen Kette verbundenen Transportelementen, hier Fahrwagen, die über ein Führungssystem - längs einer Streckenführung bzw. in einer dadurch definierten Transportrichtung/Förderrichtung - mit Geschwindigkeiten bis zu 3,5 m/s bewegt werden.

Die Streckenführung erfolgt raumgängig, zumeist horizontal.

Ein Antrieb der Fahrwagenkette bzw. der
Transportelementekette erfolgt über Kettenantriebe, Reibradantriebe und zunehmend über Linearmotorantriebe.

Als Stückgutaufnahme (Einschleusung/Einschleusungsmechanismus) und Ausschleusemechanismus befinden sich auf den Fahrwagen bzw. Transportelementen orthogonal zur Transport-/Förderrichtung installierte Gurt- bzw. Bandförderer.

Das auf Gurten/Bänder der Gurt-/Bandförderer liegende Stückgut kann so an der Ausschleusungsposition beidseitig aktiv in die Endstelle gefördert werden (Ausschleusung).

Eine Antriebsenergie der Gurte bzw. Bänder wird mechanisch oder elektrisch über Schleifleitungen und zunehmend berührungslos übertragen.

Ein Liniendurchsatz von Sortieranlagen ist ein entscheidender Parameter (für die Sortierleistung) für eine topologische Komplexität des gesamten Sortiersystems. Eine Erhöhung des Liniendurchsatzes - für eine erhöhte Sortierleistung - ist deshalb anzustreben.

Der Liniendurchsatz bei Querbandsortern für heterogen geformtes und vereinzeltes Stückgut wird dabei bestimmt durch dessen Geschwindigkeit, einer Teilung der Fahrwagen und eine Anzahl von Stückgut je Querband bzw. Fahrwagen.

Wurde bisher versucht, den Liniendurchsatz über eine entsprechende Veränderung/Anpassung der Geschwindigkeit, d.h. beispielsweise eine Geschwindigkeitssteigerung, eine entsprechende Veränderung/Anpassung der Teilung, d.h. beispielsweise eine stückgutabhängige Teilung, und/oder eine entsprechende Veränderung/Anpassung der Anzahl von Stückgut je Querband bzw. Fahrwagen, d.h. beispielsweise eine Anzahlerhöhung durch Mehrfachbelegung, zu erhöhen, so ist dieses aber nur beschränkt möglich, unterliegen die Geschwindigkeit, die Teilung und die Anzahl selbst bestimmten Begrenzungen.

So wird die Geschwindigkeit u.a. begrenzt durch eine Stückgutdynamik beim Ein- und Ausschleusen, eine Endstellen- und/oder Bahn- bzw. Streckenführungsgeometrie, insbesondere dortige Kurvenradien, und aerodynamische Einflüsse, insbesondere bei leichtem Stückgut. Auch wird die Geschwindigkeit begrenzt durch eine Geometrie und/oder Schwerpunktsverteilung des Stückgutes, was zu einer Kipp- und/oder Rollgefahr beim Stückgut führen kann.

Die Teilung der Fahrwagen wird u.a. begrenzt durch eine Stückgutgröße und Randbedingungen und/oder Geometrie der Streckenführung.

Die Anzahl von Stückgut je Querband bzw. Fahrwagen bzw. eine Packungsdichte wird u.a. begrenzt durch eine Größe bzw. Fläche des Querbandes

Darüber hinaus sind diesbezügliche Veränderungen/Anpassungen am Querbandsorter zur Steigerung des Liniedurchsatzes meist technisch komplex und kostenintensiv.

Weiterhin ist es - zur Steigerung des Liniendurchsatzes und Erhöhung der Sortierleistung - auch bekannt, zwei Querbandsorter nebeneinander (Parallelquergurtförderer) zu installieren.

Die technische Lösung dieses Parallelsystems bei den Querbandsortern ist allerdings auch aufwändig, komplex und/oder kostenintensiv. Solch ein System ist aus der DE 20 2011 106 265 U1 bekannt, die ein Querbandsortertransportelement nach dem Oberbegriff des Anspruchs 1 und ein Verfahren nach dem Oberbegriff des Anspruchs 8 offenbart. Der Erfindung liegt die Aufgabe zugrunde, die Nachteile im Stand der Technik zu verbessern, insbesondere einen Querbandsorter zu ermöglichen, mit welchem ein erhöhter Liniendurchsatz und eine erhöhte Sortierleistung bei zu sortierendem Stückgut durch eine entsprechende diesbezügliche Sortieranlage bzw. entsprechendes diesbezügliches Sortiersystem realisierbar ist.

Auch liegt der Erfindung die Aufgabe zugrunde, einen Querbandsorter zu ermöglichen, welcher einfach und kostengünstig realisierbar ist und welcher ein zuverlässiges Ausschleusen von Stückgut vom Fördermittel bzw. Transportelement des Querbandsorters ermöglicht.

Die Aufgabe wird durch ein Querbandsortertransportelement für einen Querbandsorter sowie durch ein Verfahren zum Ein- und/oder Ausschleusen von Stückgut in ein bzw. aus einem solchen Querbandsortertransportelement mit den Merkmalen gemäß dem jeweiligen unabhängigen Patentanspruch gelöst.

Bevorzugte Weiterbildungen der Erfindung ergeben sich auch aus den abhängigen Ansprüchen und/oder aus nachfolgenden Erläuterungen und beziehen sich sowohl auf das Querbandsortertransportelement als auch auf das Verfahren.

Das Querbandsortertransportelement, kurz im Folgenden nur Transportelement, weist dabei mindestens zwei in vertikaler Richtung beabstandet angeordnete Aufnahmeebenen zur Aufnahme von Stückgut während eines Transports des Stückguts, wie beispielsweise Postgut, wie Briefe und/oder Pakete, Gepäckstücke oder Kommissionsware, auf.

D.h., es wird bei dem Transportelement eine dritte Dimension (erste Dimension: Förder-/Transportrichtung des Transportelements; zweite Dimension: Ein-/Ausschleuserichtung bei dem Transportelement) genutzt, um in dieser dritten, in diesem Fall vertikalen, Dimension Stückgut in (mindestens zwei) übereinander liegenden Ebenen aufzunehmen bzw. zu fördern/transportieren.

Anders - vereinfacht und anschaulich ausgedrückt, das Transportelement sieht mindestens zwei übereinander angeordnete (Aufnahme-/Transport-)Ebenen vor, beispielsweise eine "untere" (Grund-)Ebene (erste Ebene) und eine darüber angeordnete "obere" (Hoch-)Ebene (zweite Ebene) vor, in welchen das zu sortierende Stückgut übereinander aufgenommen ist bzw. transportiert/gefördert wird.

Begriffe, wie oben, unten, (dar-)über(-einander), unter(-halb), obere, untere, oberste und unterste, seien dabei bzw. so im Folgenden in Bezug auf die Vertikale bzw. auf die dritte Dimension bezogen. Diesbezüglich relative Begriffe beschreiben bzw. drücken so relative Lagebeziehung bezüglich dieser Vertikalen bzw. dritten Dimension aus. Der Einfachheit halber wird so nachfolgend beispielsweise von einer ersten bzw. unteren Ebene und einer zweiten bzw. oberen Ebene gesprochen.

Gehen nachfolgende Ausführungen (formal zunächst auch nur) von zwei übereinander angeordneten Ebenen, d.h. der ersten bzw. unteren Ebene und der zweiten bzw. oberen Ebene, aus, so gelten diesbezügliche Ausführungen auch für mehrere übereinander angeordnete Ebenen, beispielsweise drei, vier, fünf oder noch mehr, entsprechend.

So kann es zweckmäßig sein, kleines und/oder leichteres Stückgut in der oberen Ebene bzw. - im Falle mehrerer vertikal beabstandet bzw. übereinander angeordneter Ebenen - in oberen Ebenen aufzunehmen bzw. zu fördern/transportieren. Des Weiteren kann es auch zweckmäßig sein, den vertikalen Abstand zwischen den Ebenen abhängig von Geometrie und/oder Abmessung von zu sortierendem Stückgut zu gestalten. Ferner kann es zweckmäßig sein, jeweils mehrere Stückgüter in einer der mindestens zwei Ebenen aufzunehmen. Mindestens in einer ersten Ebene der mindestens zwei in vertikaler Richtung beabstandet angeordneten Aufnahmeebenen ist ein Ein- und/oder Ausschleusemechanismus, insbesondere ein Gurtförderer, angeordnet.

Diese erste Ebene ist eine/die untere Ebene bei den mindestens zwei in vertikaler Richtung beabstandet angeordneten Aufnahmeebenen, insbesondere eine unterste Ebene.

Ist bei dem Transportelement die untere/unterste Ebene mit einem Gurtförderer ausgestattet, so setzt das Transportelement damit auf herkömmliche Technologien und/oder Transportelemente zum Transport, Ein- und/oder Ausschleusen bei Querbandsortern auf, welche so bei dem Transportelement weiterhin (unverändert bzw. annähernd unverändert) verwendet werden können. Auch die bisherige Querbandsortertopologie kann so mit dem Transportelement mit in unterster Ebene angeordnetem Gurtförderer unverändert weiterverwendet werden.

Weiterhin kann bei dem Gurtförderer (angeordnet in der unteren bzw. untersten Ebene) ein antreibbares Querband, insbesondere aber mehrere, im Wesentlichen parallel zueinander angeordnete, jeweils getrennt antreibbare Querbänder, vorgesehen sein. Durch solche mehreren, im Wesentlichen parallel zueinander angeordneten, jeweils getrennt antreibbaren Querbänder bei dem Gurtförderer lässt sich die Packungsdichte erhöhen - und so der Liniendurchsatz und die Sortierleistung steigern. Mindestens in einer zweiten Ebene der mindestens zwei in vertikaler Richtung beabstandet angeordneten Aufnahmeebenen ist eine Aufnahmevorrichtung für Stückgut angeordnet.

Diese zweite Ebene ist eine/die obere Ebene bei den mindestens zwei in vertikaler Richtung beabstandet angeordneten Aufnahmeebenen, insbesondere eine oberste Ebene.

Eine solche Aufnahmevorrichtung in dieser zweiten bzw. oberen/obersten Ebene kann dabei ein passives Bauteil - ähnlich einem (rein) tragendem Element bzw. einer tragenden Plattform -, wie ein Rost, ein Gestell, ein Gitter, eine Schale oder ein fremd antreibbares/angetriebenes Querband, sein.

Ist eine solche Aufnahmevorrichtung - in der zweiten Ebene - im Speziellen als Rost ausgebildet, kann hier weiter vorgesehen sein, dass eine Teilung des Rostes an die (mehreren, im Wesentlichen parallel zueinander angeordneten, jeweils getrennt antreibbaren) Querbänder eines Gurtförderers - in der ersten Ebene - angepasst ist.

Somit kann - anschaulich ausgedrückt - bei einem "Zusammenführen" der ersten Ebene und der zweiten Ebene der Rost (angeordnete in der zweiten Ebene) in den Gurtförderer bzw. die Querbänder des Gurtförderers (angeordnet in der ersten Ebene) eintauchen.

Ist eine solche Aufnahmevorrichtung - angeordnet in der zweiten bzw. oberen Ebene - im Speziellen als fremd antreibbares/angetriebenes, insbesondere dünnes, Querband - oder als mehrere, im Wesentlichen parallel zueinander angeordnete, fremd antreibbare/angetriebene, insbesondere dünne Querbänder ("passiver" bzw. fremd angetriebener Gurtförderer) - ausgebildet, kann hier weiter vorgesehen sein, dass ein Gurtförderer - angeordnet in der ersten bzw. unteren Ebene - dieses Querband bzw. diese Querbänder antreibt.

Vereinfacht ausgedrückt, das bzw. die Querbänder in der zweiten bzw. oberen Ebene werden vom darunterliegenden aktiven Querband/Querbänder bzw. Gurtförderer (angeordnet in der ersten Ebene) angetrieben.

Dazu kann vorgesehen sein, dass der vertikale Abstand zwischen der oberen und der unteren Ebene verringert wird, beispielsweise durch ein Ab-/Herabsenken der zweiten bzw. oberen Ebene, solange bis ein Kraftschluss zwischen den Querbändern der ersten und der zweiten Ebene hergestellt ist.

Kurz, das bzw. die ("passive/-n") Querbänder der passiven Aufnahmevorrichtung der zweiten oberen Ebene werden durch das bzw. die ("aktive/-n") Querbänder des aktiven Ein-/Ausschleusemechanismus bzw. Gurtförderers der ersten bzw. unteren Ebene angetrieben.

Für dieses bzw. (im Allgemeinen) für ein Verringern des vertikalen Abstandes zwischen der zweiten bzw. oberen Ebene und der ersten bzw. unteren Ebene, insbesondere für ein Absenken der zweiten bzw. oberen Ebene (auf bzw. annähernd auf die vertikale Höhe der ersten bzw. unteren Ebene), kann eine Verstellvorrichtung bei dem Transportelement, beispielsweise eine Hubvorrichtung, vorgesehen sein.

Diese Verstellvorrichtung bzw. eine solche Hubvorrichtung kann dabei einen - in diesem Fall dann - "Transportelement internen" (d.h. an dem Transportelement angeordneten und mit diesem mitbewegten) Aktor (Antriebseinheit) aufweisen, welcher die Verstellvorrichtung bzw. Hubvorrichtung oder Stellglieder für die Verstellvorrichtung bzw. Hubvorrichtung betätigt.

Weiter kann hier dann eine Steuereinheit vorgesehen sein, welche den Aktor bzw. die Antriebseinheit (und darüber die Verstell-/Hubvorrichtung) diesbezüglich steuert.

Alternativ hierzu kann eine Betätigung der Verstellvorrichtung bzw. der Hubvorrichtung "von außen" erfolgen, d.h. durch einen nicht an dem Transportelement angeordneten bzw. mit diesem mitbewegten Aktor, beispielsweise durch einen feststehenden und ein Stellglied für die Verstellvorrichtung bzw. Hubvorrichtung antreibenden Aktor/Antriebseinheit. Auch hier kann eine diesbezügliche Steuereinheit für den Aktor/Antriebseinheit vorgesehen sein.

Erfolgt eine solche "Manipulation" der Verstellvorrichtung bzw. Hubvorrichtung "von außen", so kann das Transportelement diesbezüglich vollständig passiv ausgebildet und damit kostengünstig sein.

Ist eine solche - "passive" - Aufnahmevorrichtung - in der zweiten Ebene - im Speziellen als Schale ausgebildet, kann hier weiter vorgesehen sein, dass diese Schale lösbar bzw. (im Kompletten) abnehmbar in der zweiten bzw. oberen Ebene angeordnet ist, beispielsweise durch eine entsprechende Aufhängung/Aufnahme in der zweiten bzw. oberen Ebene, welche die Schale aufnehmen kann.

Alternativ zu einer solchen "passiven" Aufnahmevorrichtung in der zweiten bzw. oberen Ebene, welche so in der Regel ein Absenken/Manipulieren dieser (zweiten bzw. oberen) Ebene auf die erste bzw. untere Ebene mit dortigem Ein- und/oder Ausschleusemechanismus vorsehen kann, durch welchen Ein- und/oder Ausschleusemechanismus in der ersten bzw. unteren Ebene dann das Ein- und/oder Ausschleusen von Stückgut in die abgesenkte zweite bzw. obere Ebene erfolgt (zum Ein- und/oder Ausschleusen von Stückgut in die erste bzw. untere Ebene und/oder zum Transport wird die zweite bzw. obere Ebene dann wieder angehoben/manipuliert), kann eine solche Aufnahmevorrichtung auch ein aktives Bauteil, wie (auch) ein Gurtförderer - mit einem oder auch mehreren, im Wesentlichen parallel zueinander angeordneten, jeweils getrennt antreibbaren Querbändern, sein.

Ist so eine "aktive" Aufnahmevorrichtung für die zweite bzw. obere Ebene vorgesehen, so kann die Ein- und/oder Ausschleusung von Stückgut in die bzw. aus der zweiten bzw. oberen Ebene unmittelbar, d.h. ohne ein Absenken/Manipulieren der zweiten bzw. oberen Ebene, wie auf die - einen Ein- und/oder Ausschleusemechanismus aufweisende - erste bzw. untere Ebene, (bei dem - aufrechterhaltenem und/oder "beliebig" vorgebbaren/einstellbaren - vertikalen Abstand zwischen den Ebenen) erfolgen.

Insbesondere eine parallele, d.h. ort- und/oder zeitgleiche, Aus- und/oder Einschleusung von Stückgut, in die (mindestens zwei bzw. mehreren) Ebenen ist dadurch möglich. Liniendurchsatz und Sortierleistung können so gesteigert werden. Die "aktive" Ausführungsform ist kein Teil der beanspruchten Erfindung. Ferner ist es auch möglich, bei dem Transportelement "passive" und "aktive" Aufnahmevorrichtungen innerhalb einer Ebene (bei mehreren vorhandenen Ebenen) - ähnlich wie nebeneinander angeordnete Gurtförderer bei Parallelsystemen - und/oder auch über mehrere Ebenen hinweg, beispielsweise abwechselnd, zu kombinieren. Liniendurchsatz und Sortierleistung können so weiter drastisch gesteigert werden.

Auch kann beispielsweise weiter vorgesehen sein, bei einem Verteilförderer eines Querbandsorters mehrere von den Transportelementen gelenkig miteinander, insbesondere zu einer Endloskette, zu verbinden. Die Endloskette wird so alle Ausschleusungsstellen bei der Sortieranlage überstreichen können.

Ermöglicht das Transportelement verschiedene Möglichkeiten der Ein- und/oder Ausschleusung von Stückgut, so sieht das Verfahren zum Ein- und/oder Ausschleusen von Stückgut in das bzw. aus dem Transportelement vor, dass Stückgut in eine in einem vorgebbaren vertikalen Abstand über einer unteren Ebene der mindestens zwei in vertikaler Richtung beabstandet angeordneten Aufnahmeebenen angeordnete obere Ebene der mindestens zwei in vertikaler Richtung beabstandet angeordneten Aufnahmeebenen eingeschleust und/oder ausgeschleust wird.

Der vorgebbare vertikale Abstand der Ebenen kann sich dabei an der Querbandsortertopologie und/oder an Geometrie und/oder Abmessung von zu sortierendem Stückgut orientieren.

Auch kann das Verfahren zum Ein- und/oder Ausschleusen von Stückgut in das bzw. aus dem Transportelement vorsehen, dass Stückgut in eine zumindest annähernd auf eine vertikale Höhe einer unteren Ebene der mindestens zwei in vertikaler Richtung beabstandet angeordneten Aufnahmeebenen herabgesenkte obere Ebene, eingeschleust und/oder ausgeschleust wird. Erfindungsgemäss ist hier weiter auch vorgesehen, dass das Ein- und/oder das Ausschleusen von Stückgut in die bzw. aus der herabgesenkten zweiten bzw. oberen Ebene und das Ein- und/oder das Ausschleusen von Stückgut in die bzw. aus der ersten bzw. unteren Ebene unter Verwendung desselben Ein- und/oder Ausschleusemechanismus erfolgt.

Dazu kann vorgesehen sein, dass die zweite bzw. obere Ebene derart zumindest annähernd auf die vertikale Höhe der ersten bzw. unteren Ebene herabgesenkt wird, beispielsweise mittels der Verstell- bzw. Hubvorrichtung, dass Stückgut unter Verwendung dieses - dann - gemeinsamen Ein- und/oder Ausschleusemechanismus in die herabgesenkte obere Ebene ein- und/oder ausschleusbar ist.

Besonders zweckmäßig ist es, wenn dieser "gemeinsame" Ein- und/oder Ausschleusemechanismus ein Gurtförderer - angeordnet in der ersten bzw. unteren Ebene - ist, kann so - annähernd unverändert - auf bisherige Technologien zum Transport, Ein- und/oder Ausschleusen bei Querbandsortern aufgesetzt werden. Auch die bisherige Querbandsortertopologie kann (nahezu) unverändert weiter verwendet werden.

Weiter kann dann vorsehen sein, dass zu einem Einschleusen und/oder Ausschleusen von Stückgut in die bzw. aus der unteren Ebene die herabgesenkte zweite bzw. obere Ebene (dann wieder) angehoben wird.

Vereinfacht ausgedrückt, Stückgut wird zunächst mittels des Gurtförderers - ohne Relativbewegung - in die bzw. aus der herabgesenkten zweiten bzw. oberen Ebene ein- und/oder ausgeschleust; danach wird die herabgesenkte zweite bzw. obere Ebene über die erste untere Ebene (an-)gehoben; anschließend wird Stückgut in die erste bzw. untere Ebene mittels des Gurtförderer eingeschleust.

Auch beim Ausschleusen von Stückgut aus der ersten bzw. unteren Ebene (wie auch beim Transport) ist so die zweite bzw. obere Ebene angehoben (bzw. in dem vertikalen Abstand zu der ersten bzw. unteren Ebene).

Der Transport bzw. das Fördern von Stückgut kann dann zweckmäßiger Weise bei einem vorgebbaren vertikalen Abstand der Ebenen, welcher vorgebbare vertikale Abstand sich nach Geometrie und/oder Abmessung und/oder Querbandsortertopologie richten kann, erfolgen.

Die Erfindung führt so zu zahlreichen Vorteilen, welche sich u.a. in höherem Liniendurchsatz und gesteigerter Sortierleistung (durch höhere Packungsdichte (durch Mehrfach-Belegung)), in geringeren Kosten (durch einfache Nachrüstbarkeit und/oder keinen Änderungen bei bestehenden, so weiterverwendbaren Systemen), in geringerer Komplexität, in höherer Systemsicherheit und Zuverlässigkeit widerspiegelt.

So ermöglicht die Erfindung, dass die bisherigen Technologien zum Transport, Ein- oder Ausschleusen von Stückgut bei Querbandsortern unverändert weiterverwendet werden können. Teilung und Geschwindigkeit können beibehalten werden; Packungsdichte kann durch Mehrfach-Belegung erhöht werden.

Auch erfordert die Erfindung keine Änderung der bisherigen Sortertopologie, Fahrzeugantriebstechnik, Schienenführung oder Energieversorgung. Bereits bestehende Querbandsorter können einfach nachgerüstet werden.

Die bisher gegebene Beschreibung vorteilhafter Ausgestaltungen der Erfindung enthält zahlreiche Merkmale, die in den einzelnen Unteransprüchen teilweise zu mehreren zusammengefasst wiedergegeben sind. Diese Merkmale wird der Fachmann jedoch zweckmäßigerweise auch einzeln betrachten und zu sinnvollen weiteren Kombinationen zusammenfassen.

Die oben beschriebenen Eigenschaften, Merkmale und Vorteile dieser Erfindung, sowie die Art und Weise, wie diese erreicht werden, werden klarer und deutlicher verständlich im Zusammenhang mit der folgenden Beschreibung der Ausführungsbeispiele, die im Zusammenhang mit den Figuren näher erläutert werden.

Funktions-/bauartgleiche bzw. identische Elemente oder Komponenten weisen in den Ausführungsbeispielen gleiche Bezugszeichen auf.

Es zeigen:
- Figur 1: eine erste Ansicht eines Querbandsortertransportelements eines Querbandsorters gemäß einem erfindungsgemäßen Ausführungsbeispiel (Transportkonfiguration, beladen),
- Figur 2: eine zweite Ansicht des Querbandsortertransportelement gemäß dem erfindungsgemäßen Ausführungsbeispiel (Leerkonfiguration, unbeladen),
- Figur 3: eine erste Ansicht eines Querbandsortertransportelements eines Querbandsorters gemäß einem nicht-beanspruchten Ausführungsbeispiel (Transportkonfiguration, beladen) und
- Figur 4: eine zweite Ansicht des Querbandsortertransportelements gemäß dem nicht-beanspruchten Ausführungsbeispiel (teilbeladen).

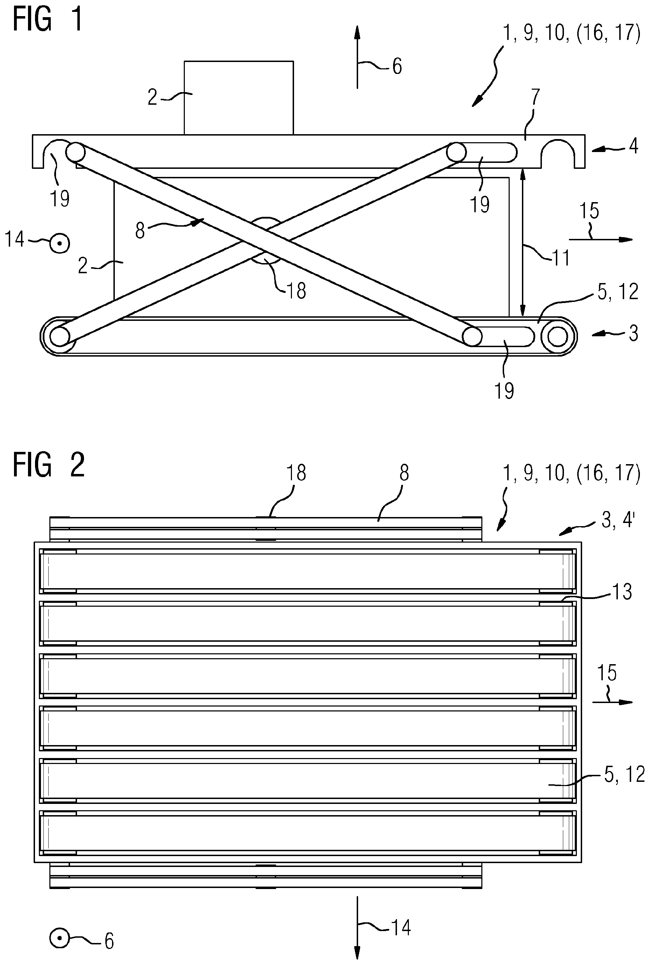

Passives Querbandsortertransportelement (FIG 1 und FIG 2)

### - Querbandsorter 10 und Querbandtransportelement 1

Figur 1 und Figur 2 zeigen jeweils ein Querbandsortertransportelement 1 für einen Verteilförderer 9 eines Querbandsorters 10 einer diesbezüglichen Sortieranlage eines Sortiersystems zum Sortieren von Stückgut 2, wie beispielsweise Paketstücke (unterschiedlicher Geometrie und/oder Abmessung), in einer ersten (Figur 1) und zweiten Ansicht (Figur 2) bzw. in einer ersten (Figur 1) und zweiten Konfiguration (Figur 2).

Bei diesem Querbandsorter 10 bzw. Verteilförderer 9 sind eine Vielzahl solcher Querbandsortertransportelemente 1 (Fahrwagen), kurz im Folgenden nur Transportelemente 1 nach Figur 1 und Figur 2, zum einer geschlossenen Kette gelenkig miteinander verbunden (Transportelementekette) und laufen - in Transport-/Föderrichtung 14 - geführt in einem Schienensystems mit weitgehend horizontaler Streckenführung (nicht dargestellt).

Figur 1 und Figur 2 zeigen - exemplarisch - das Transportelement 1 in zwei Zuständen/Konfigurationen, d.h. einem Transportzustand/-konfiguration, in welchem das Transportelement 1 (exemplarisch) mit zwei Stückgütern 2 unterschiedlicher Abmessung beladen ist und so (zu einer Ausschleusungs- bzw. Ziel-/Endstelle) gefördert (und dort so entladen) wird (Figur 1), und einem Leerzustand/-konfiguration ohne Stückgut, in welchem das Transportelement 1 zum Beladen (oder nach Entladung) an der Einschleusungs- bzw. der Zielstelle zur Verfügung steht (Figur 2).

Ein Antrieb der Transportelementekette bzw. der Transportelemente 1 erfolgt über Linearmotorantriebe (nicht dargestellt). Das Transportelement 1 weist, wie die Figuren 1 und 2 zeigen, zwei Aufnahmeebenen 3, 4 (vgl. Figur 1) bzw. 4' (vgl. Figur 2) für Stückgut 2 auf, d.h. eine - in vertikaler Richtung 6 - untere Ebene 3 sowie eine - in vertikaler Richtung 6 - obere Ebene 4 (Figur 1) bzw. 4' (Figur 2), in welchen jeweils ein oder gegebenenfalls mehrere Stückgüter 2 aufgenommen werden können.

Dabei wird kleineres und/oder leichteres Stückgut 2 - auch in Mehrfachbelegung - in der oberen Ebene 4 bzw. 4'aufgenommen. Entsprechend wird schweres und/oder größeres Stückgut 2 - auch in Mehrfachbelegung - in der unteren Ebene 3 aufgenommen.

Somit kann hier Stückgut 2 nicht nur nebeneinander (bei Mehrfachbeladung von Stückgut 2 in der oberen bzw. unteren Ebene 3, 4 bzw. 4'), sondern auch übereinander aufgenommen bzw. geschichtet gefördert werden.

Die beiden Ebenen 3, 4 bzw. 4'sind über einen Scherenmechanismus 8 mit Drehdämpfer 18 miteinander verbunden bzw. aneinander gekoppelt, wodurch deren vertikaler Abstand 11 (gezielt) veränderbar und einstellbar ist (vgl. Figuren 1 und 2). Dazu sind Enden der Scheren des Scherenmechanismus 8 in entsprechende Aufnahmen 19, wie Langlöcher und Führungen, an den Ebenen 3, 4 bzw. 4' (gelenkig) aufgenommen bzw. geführt.

Die obere Ebene 4 bzw. 4'des Transportelements 1 ist, wie Figur 2 verdeutlicht, als Rost 7 mit regelmäßiger, vorgegebener (Längs-)Teilung 13 ausgebildet.

Die untere Ebene 3 ist als Gurtförderer 5 (Ein-/Ausschleusemechanismus 5 für Stückgut 2) mit - in diesem exemplarischen Fall - sechs parallel nebeneinander, jeweils quer zur Transport-/Förderrichtung 14 des Transportelements 1 (in Ein-/Ausschleusungsrichtung 15) ausgerichteten, schmalen Querbändern 12, d.h. einer Querbandgruppe 12, ausgebildet. Wie Figur 2 zeigt sind dabei die (Längs-)Teilung 13 des Rostes 7 der oberen Ebene 4 bzw. 4' und die Querbänder 12 bzw. Anordnung der Querbänder 12 des Gurtförderers 5 derart aneinander angepasst, dass der Rost 7 bzw. dessen Teilung 13 - bei entsprechender (gesteuerter) Stellung des Scherenmechanismus 8 - in den Gurtförderer 5 bzw. dessen Querbänder 12 eintauchen kann (vgl. Figur 2) - kurz im Folgenden vereinfacht als "Eintauchen" der (herabgesenkten) oberen Ebene 4' in die untere Ebene 3 bezeichnet.

Die Querbänder 12 sind dabei jeweils getrennt ansteuer- und beweg-/förderbar - und realisieren so das Ein- und Ausschleusen von Stückgut 2 (in die bzw. aus der unteren Ebene 3 bzw. in die bzw. aus der herabgesenkten, "eingetauchten" oberen Ebene 4'(vgl. Figur 2)).

So kann Stückgut 2 an der Einschleusungsposition beidseitig aktiv (ohne Relativbewegung) auf die Querbänder 12 (und so in die untere Ebene 3 und die herabgesenkte, "eingetauchte" obere Ebene 4') aufgefördert werden (Einschleusung); das auf den Querbändern 12 auf-/anliegende Stückgut (aus der unteren Ebene 3 oder aus der herabgesenkten, "eingetauchten" oberen Ebene 4') kann so an der Ausschleusungsposition beidseitig aktiv in die Endstelle (aus-)gefördert werden (Ausschleusung).

Eine Antriebsenergie der Querbänder 12 wird mechanisch oder elektrisch über Schleifleitungen und zunehmend berührungslos übertragen (nicht gezeigt).

(Nicht dargestellte) feststehende, über eine Steuereinheit 17 (nicht dargestellt) ansteuerbare Aktoren 16 treiben von "außen" (ebenfalls nicht dargestellte) Stellglieder an, welche den Scherenmechanismus 8 diesbezüglich betätigen, so den vertikalen Abstand 11 der Ebenen 3, 4 bzw. 4' verändern bzw. die vertikale Höhe der oberen Ebene 4 bzw. 4' einstellen (absenken, anheben des Rostes 7) - und so auch das "Eintauchen" der oberen Ebene 4 bzw. des Rostes 7 in die untere Ebene 3 bzw. in die Querbänder 12 des Querbandförderers 5 realisieren.

### - Ein-/Ausschleusen und Transport von Stückgut

Erreicht das (leere, unbeladene) Transportelement 1 seine Einschleuseposition, so wird die obere Ebene 4 bzw. der Rost 7 mittels des Scherenmechanismus 8 auf die untere Ebene 3 bzw. den Querbandförderer 5 abgesenkt, d.h. die obere Ebene 4 bzw. der Rost 7 taucht in die untere Ebene 3 bzw. die Querbänder 12 des Querbandförderers 5 ein - und realisiert so die herabgesenkte, "eingetauchte" obere Ebene 4' (vgl. Figur 2). Auch kann sich - erreicht das (leere, unbeladene) Transportelement 1 seine Einschleuseposition - die obere Ebene 4 bzw. 4' (bereits) in die untere Ebene 3 "eingetaucht" befinden (vgl. Figur 2).

Stückgut 2, d.h. ein oder mehrere Stückgüter 2, wird bzw. werden so ohne Relativbewegung mittels des Gurtförderers 5 auf dessen Querbänder 12 (auch Querbandgruppe 12) - und so in die herabgesenkte, eingetauchte obere Ebene 4' - aufgefördert.

Danach wird die herabgesenkte, "eingetauchte" obere Ebene 4' bzw. der Rost 7 mittels des Scherenmechanismus 8 auf eine vorgebbare (vertikale) Höhe (vorgebbarer vertikaler Abstand 11 zwischen den Ebenen 3, 4) angehoben, taucht dabei aus der unteren Ebene 3 bzw. aus den Querbändern 12 (wieder) aus - und nimmt dabei das eingeschleuste Stückgut 2 mit (auf die vorgebare Höhe nach oben).

Die vorgebbare Höhe bzw. der vorgebare vertikale Abstand richtet sich dabei nach den Abmessungen/Dimensionen des zu sortierenden Stückguts 2.

Anschließend kann Stückgut 2 (ohne Relativbewegung) mittels des Gurtförderers 5 auf dessen Querbänder 12 (auch Querbandgruppe 12) und so in die "freie/freigegebene" untere Ebene 3 aufgefördert bzw. eingeschleust werden - befindet sich die obere Ebene 4 mit dem dort eingeschleusten Stückgut 2 (auf die vorgebare Höhe) angehoben (vgl. Figur 1).

Derart beladen (vgl. Figur 1) wird das Transportelement 1 - bei angehobener oberer Ebene 4 - an seine Zielstelle/Endstelle (Ausschleuseposition) gefördert, wo die Stückgutausschleusung (entsprechend umgekehrt der Einschleusung) bei dem Transportelement 1 erfolgt.

Zunächst wird dabei dann das in der unteren Ebene 3 befindliche Stückgut 2 mittels des Querbandförderers 5 bzw. dessen Querbänder 12 in die Endstelle ausgeschleust.

Ist die untere Ebene 3 dann frei/freigegeben, wird die obere Ebene 4 mittels des Scherenmechanismus 8 auf die untere Ebene 3 bzw. den Querbandförderer 5 abgesenkt, d.h. die obere Ebene 4 bzw. der Rost 7 taucht (wieder) in die untere Ebene 3 bzw. die Querbänder 12 des Querbandförderers 5 ein - und realisiert so (wieder) die herabgesenkte, "eingetauchte" obere Ebene 4'.

Das sich auf dem Rost 7 bzw. in der herabgesenkten, eingetauchten oberen Ebene 4' befindende Stückgut wird dabei auf die Querbänder 12 abgelegt.

Das Stückgut 2 der herabgesenkten, eingetauchten oberen Ebene 4' wird dann (ohne Relativbewegung) mittels des Gurtförderers 5 bzw. dessen Querbänder 12 in die Endstelle ausgeschleust.

Das Transportelement 1 ist dann vollständig entladen (vgl. Figur 2) - und steht zur weiteren Bearbeitung bzw. Beladung zur Verfügung.

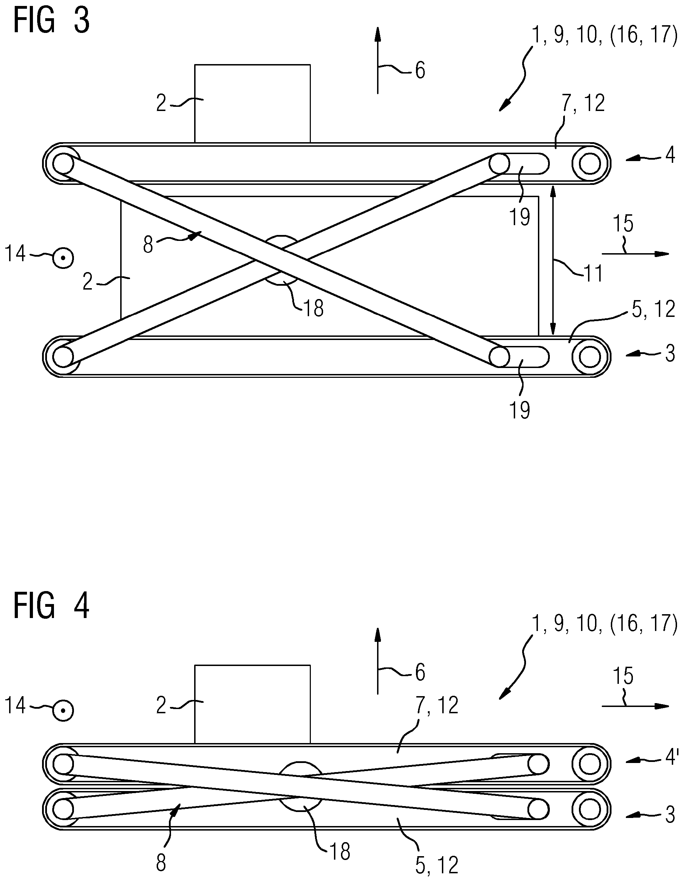

### Aktives Querbandsortertransportelement (Figur 3 und Figur 4)

### - Querbandsorter 10 und Querbandtransportelement 1

Figur 3 und Figur 4 zeigen jeweils ein nichtbeanspruchtes Querbandsortertransportelement 1 für einen Verteilförderer 9 eines Querbandsorters 10 in einer ersten (Figur 3) und zweiten Ansicht (Figur 4) bzw. in einer ersten (FIG 3) und zweiten Konfiguration (Figur 4).

Auch hier sind bei diesem Querbandsorter 10 bzw. Verteilförderer 9 sind eine Vielzahl solcher Transportelemente 1 nach Figur 3 und Figur 4, zum der geschlossenen Kette/Transportelementekette gelenkig miteinander verbunden und laufen - in Transport-/Föderrichtung 14 - geführt in einem Schienensystems mit weitgehend horizontaler Streckenführung (nicht dargestellt).

Figur 3 und Figur 4 zeigen - exemplarisch - das Transportelement 1 in zwei Zuständen/Konfigurationen, d.h. einem Transportzustand/-konfiguration, in welchem das Transportelement 1 (exemplarisch) mit zwei Stückgütern 2 unterschiedlicher Abmessung beladen ist und so (zu einer Ausschleusungs- bzw. Ziel/Endstelle) gefördert (und dort so entladen) wird (Figur 3), und einem "teilentladenen" Zustand/-konfiguration (auch "teilbeladener" Zustand) mit nur einem Stückgut 2 (das andere Stückgut 2 wurde bereits entladen/ausgeschleust bzw. nur dieses eine Stückgut 2 wurde bisher eingeschleust) während des Entladens (Beladens) an der Ausschleusungs- bzw. Ziel/Endstelle (Figur 4).

Der Antrieb der Transportelementekette bzw. der Transportelemente 1 erfolgt über Linearmotorantriebe (nicht dargestellt). Das Transportelement 1 weist, wie die Figuren 3 und 4 zeigen, auch hier die zwei Aufnahmeebenen 3, 4 (vgl. Figur 3) bzw. 4' (vgl. Figur 4) für Stückgut 2 auf, d.h. die - in vertikaler Richtung 6 - untere Ebene 3 sowie die - in vertikaler Richtung 6 - obere Ebene 4 (Figur 3) bzw. 4' (Figur 4), in welchen jeweils auch hier ein oder gegebenenfalls mehrere Stückgüter 2 aufgenommen werden können.

Kleineres und/oder leichteres Stückgut 2 - auch in Mehrfachbelegung - wird auch hier in der oberen Ebene 4 bzw. 4' aufgenommen. Schweres und/oder größeres Stückgut 2 - auch in Mehrfachbelegung - wird in die untere Ebene 3 aufgenommen.

Somit kann auch hier Stückgut 2 nicht nur nebeneinander (bei Mehrfachbeladung von Stückgut 2 in der oberen bzw. unteren Ebene 3, 4 bzw. 4'), sondern auch übereinander aufgenommen bzw. geschichtet gefördert werden.

Die obere Ebene 4 bzw. 4' des Transportelements 1 ist, wie die Figuren 3 und 4 verdeutlichen (und anders als aus den Figuren 1 und 2 bekannt), hier ebenfalls als Gurtförderer 7 (Ein-/Ausschleusemechanismus 7 für Stückgut 2) mit einem quer zur Transport-/Förderrichtung 14 des Transportelements 1 (in Ein-/Ausschleusungsrichtung 15) ausgerichteten Querband 12 ausgebildet.

Auch die untere Ebene 3 ist als Gurtförderer 5 (Ein-/Ausschleusemechanismus 5 für Stückgut 2) mit einem quer zur Transport-/Förderrichtung 14 des Transportelements 1 (in Ein-/Ausschleusungsrichtung 15) ausgerichteten Querband 12 ausgebildet.

Die beiden Ebenen 3, 4 bzw. 4' sind hier ebenfalls über einen Scherenmechanismus 8 mit Drehdämpfer 18 miteinander verbunden bzw. aneinander gekoppelt, wodurch deren vertikaler Abstand 11 (gezielt) veränderbar und einstellbar ist (vgl. Figuren 3 und 4). Dazu sind Enden der Scheren des Scherenmechanismus 8 auch hier in entsprechende Aufnahmen 19, wie Langlöcher und Führungen, an den Ebenen 3, 4 bzw. 4' (gelenkig) aufgenommen bzw. geführt.

Wie Figur 4 zeigt, kann so mittels dieses Scherenmechanismus 8 die obere Ebene 4 (aus der in Figur 3 gezeigten angehobenen Position - hier weisen die obere und die untere Ebene 3, 4 den vorgebbaren vertikalen Abstand 11 zueinander auf) annähernd auf die (vertikale) Höhe der unteren Ebene 3 abgesenkt werden (herabgesenkte, obere Ebene 4'). Dabei kommen, wie Figur 4 zeigt, die Querbänder 12 der Gurtförderer 5, 7 der oberen und unteren Ebene 3, 4 bzw. 4' annähernd aufeinander "zu liegen".

Auch hier treiben (nicht dargestellte) feststehende, über eine Steuereinheit 17 (nicht dargestellt) ansteuerbare Aktoren 16 von "außen" (ebenfalls nicht dargestellte) Stellglieder an, welche den Scherenmechanismus 8 diesbezüglich betätigen, so den vertikalen Abstand 11 der Ebenen 3, 4 bzw. 4' verändern bzw. die vertikale Höhe der oberen Ebene 4 bzw. 4' einstellen (absenken, anheben der oberen Ebene 4) - und so auch das Ab-/Herabsenken der oberen Ebene 4 (annähernd) auf die untere Ebene 3 bzw. das Querband 12 des Querbandförderers 7 der oberen Ebene 4 bzw. 4'(annähernd) auf das Querband 12 des Querbandförderers 5 der unteren Ebene 3 realisieren.

Sind bei dem Transportelement 1 hier beide Ebenen 3, 4 bzw. 4' mit einem (aktiven) Ein-/Ausschleusemechanismus 5, d.h. dem Gurtförderer 5 bzw. 7, ausgestattet, so kann hier Stückgut 2 - unabhängig von der unteren Ebene 3 bzw. auch unabhängig von der vertikalen Position der oberen Ebene 4 bzw. 4' - an der Zielstelle beidseitig aktiv (ohne Relativbewegung) in die obere Ebene 4 bzw. 4' ein- und/oder ausgeschleust werden (Ein-/Ausschleusung).

Auch ein (zeit- und/oder ortgleiches) paralleles Ein- und/oder Ausschleusen von Stückgut 2 in beide Ebenen 3, 4 ist - bei entsprechender Ausgestaltung der End-/Zielstellen der (Querbandsorter-)Sortieranlage - bei dem Transportelement 1 möglich.

Die Antriebsenergie der Querbänder 12 beider Gurtförderer 5, 7 wird auch hier mechanisch oder elektrisch über Schleifleitungen und zunehmend berührungslos übertragen (nicht gezeigt).

### - Ein-/Ausschleusen von Stückgut (über nur eine "untere" Ein-/Ausschleusung) und Transport von Stückgut

Erreicht hier das (leere, unbeladene) Transportelement 1 seine Einschleuseposition/Zielstelle - mit nur einer dortig vorgesehenen "unteren" Einschleusung von Stückgut 2 -, so wird die obere Ebene 4 mittels des Scherenmechanismus 8 annähernd auf die untere Ebene 3 abgesenkt. Auch kann sich - erreicht das (leere, unbeladene) Transportelement 1 seine Einschleuseposition - die obere Ebene 4 bzw. 4' (bereits) (annähernd) abgesenkt auf die untere Ebene 3 befinden.

Stückgut 2, d.h. ein oder mehrere Stückgüter 2, wird bzw. werden an der Einschleuseposition/Zielstelle so dann mittels des Gurtförderers 7 der herabgesenkten, oberen Eben 4' auf dessen Querband 12 - und so in die herabgesenkte, obere Ebene 4' - aufgefördert (vgl. Figur 4).

Danach wird die herabgesenkte, obere Ebene 4' mittels des Scherenmechanismus 8 auf eine vorgebbare (vertikale) Höhe (vorgebbarer vertikaler Abstand 11 zwischen den Ebenen 3, 4) angehoben - und nimmt dabei das eingeschleuste und auf dem Querband 12 des Gurtförderers 7 der oberen Ebene 4 liegende Stückgut 2 mit (auf die vorgebare Höhe nach oben).

Die vorgebbare Höhe bzw. der vorgebare vertikale Abstand richtet sich dabei auch hier nach den Abmessungen/Dimensionen des zu sortierenden Stückguts 2.

Anschließend kann Stückgut 2 (ohne Relativbewegung) mittels des Gurtförderers 5 der unteren Ebene 3 auf dessen Querband 12 aufgefördert bzw. eingeschleust werden - befindet sich die obere Ebene 4 mit dem dort eingeschleusten Stückgut 2 (auf die vorgebare Höhe) angehoben (vgl. Figur 3).

Derart beladen (vgl. Figur 3) wird das Transportelement 1 - bei angehobener oberer Ebene 4 - an seine Zielstelle/Endstelle (Ausschleuseposition) gefördert, wo die Stückgutausschleusung (entsprechend umgekehrt der Einschleusung und auch hier auch "nur" über eine "untere" Ausschleusung) bei dem Transportelement 1 erfolgt.

Zunächst wird dabei dann das in der unteren Ebene 3 befindliche Stückgut 2 mittels des dortigen Querbandförderers 5 bzw. dessen Querband 12 in die Endstelle ausgeschleust.

Ist die untere Ebene 3 dann frei/freigegeben, wird die obere Ebene 4 mittels des Scherenmechanismus 8 annähernd auf die untere Ebene 3 abgesenkt (vgl. Figur 4).

Das sich auf dem Querband 12 des Gurtförderers 7 der herabgesenkten, oberen Ebene 4' befindende Stückgut wird dann (ohne Relativbewegung) mittels des Gurtförderers 7 der oberen Ebene 4 bzw. dessen Querband 12 in die Endstelle ausgeschleust.

Das Transportelement 1 ist dann vollständig entladen - und steht zur weiteren Bearbeitung bzw. Beladung zur Verfügung.

Im Weiteren sei eine Alternative der Ein- und/oder Ausschleusung von Stückgut 2 in das Transportelement 1 nach den Figuren 3 und 4 kurz dargestellt.

### - Ein-/Ausschleusen von Stückgut (über eine "untere" und "obere" Ein-/Ausschleusung) und Transport von Stückgut

Erreicht hier das (leere, unbeladene) Transportelement 1 seine Einschleuseposition/Zielstelle - mit einer dortig vorgesehenen "unteren" und "oberen" Einschleusung von Stückgut 2 -, so befindet sich die obere Ebene 4 und die untere Ebene 3 im vorgebbaren vertikalen Abstand 11 zueinander.

Über die "obere" und "untere" Einschleusung erfolgt an der Einschleuseposition/Zielstelle ein paralleles Einschleusen von Stückgut 2, wobei (zeit- und ortgleich) Stückgut 2 mittels des jeweiligen Gurtförderers 5 bzw. 7 in der oberen und unteren Ebene 3, 4 auf dessen jeweiligen Querbands 12 aufgefördert wird (vgl. Figur 3).

Derart beladen (vgl. Figur 3) wird das Transportelement 1 - bei angehobener oberer Ebene 4 - an seine Zielstelle/Endstelle (Ausschleuseposition) gefördert, wo auch hier die Stückgutausschleusung (entsprechend umgekehrt der Einschleusung) parallel über eine "untere" und "obere" Ausschleusung bei dem Transportelement 1 erfolgt.

So wird an der Zielstelle/Endstelle (Ausschleuseposition) über die "obere" und "untere" Ausschleusung parallel Stückgut 2 ausgeschleust, wobei (zeit- und ortgleich) das Stückgut 2 mittels des jeweiligen Gurtförderers 5 bzw. 7 in der oberen und unteren Ebene 3, 4 von dessen jeweiligen Querbands 12 ausgefördert wird (vgl. Figur 3).

## Patentansprüche

1. Querbandsortertransportelement (1) für einen Querbandsorter (10) mit
mindestens zwei in vertikaler Richtung (6) beabstandet angeordnete Aufnahmeebenen (3, 4) zur Aufnahme von Stückgut (2) während eines Transports des Stückguts (2), wobei in einer unteren Aufnahmeebene (3) der mindestens zwei in vertikaler Richtung (6) beabstandet angeordneten Aufnahmeebenen (3, 4) und zum Ein- und/oder Ausschleusen von Stückgut in die untere Ebene ein Ein- und/oder Ausschleusemechanismus (5) angeordnet ist,
**dadurch gekennzeichnet, dass** eine obere Aufnahmeebene (4) der mindestens zwei in vertikaler Richtung (6) beabstandet angeordneten Aufnahmeebenen (3, 4) derart zumindest annähernd auf eine vertikale Höhe der unteren Aufnahmeebene (3) herabsenkbar ist, dass Stückgut (2) unter Verwendung des Ein- und/oder Ausschleusemechanismus (5) in die herabgesenkte obere Aufnahmeebene (4') einschleusbar und/oder aus der herabgesenkten oberen Aufnahmeebene (4') ausschleusbar ist.

2. Transportelement (1) nach Anspruch 1,
**dadurch gekennzeichnet, dass** der Ein- und/oder Ausschleusemechanismus ein Gurtförderer ist und der Gurtförderer ein antreibbares Querband (12) oder mehrere, parallel zueinander angeordnete, jeweils getrennt antreibbare Querbänder (12) aufweist.

3. Querbandsortertransportelement (1) nach einem der beiden voranstehenden Ansprüche,
**dadurch gekennzeichnet, dass** in der oberen Ebene (4) eine Aufnahmevorrichtung (7) für Stückgut (2) angeordnet ist, wobei die Aufnahmevorrichtung (7) ein passives Bauteil ist.

4. Querbandsortertransportelement (1) nach Anspruch 3,
**dadurch gekennzeichnet, dass** das passive Bauteil ein Rost, ein Gestell, ein Gitter, eine Schale oder ein fremd antreibbares Querband ist.

5. Querbandsortertransportelement (1) nach Anspruch 4,
**dadurch gekennzeichnet, dass**
der Rost (7) eine an die Querbänder (12) des Gurtförderers angepasste Teilung (13) aufweist.

6. Querbandsortertransportelement (1) nach einem der voranstehenden Ansprüche,
**gekennzeichnet durch**
eine Verstellvorrichtung (8), mittels welcher ein vertikaler Abstand (11) der zwei Aufnahmeebenen (3, 4) verstellbar ist, und mittels welcher die obere Aufnahmeebene (4) zumindest annähernd auf die vertikale Höhe der unteren Aufnahmeebene (3) herabsenkbar ist.

7. Querbandsortertransportelement (1) nach Anspruch 6,
**gekennzeichnet durch**
eine Antriebseinheit (16), welche die Verstellvorrichtung (8) betätigt und/oder eine Steuereinheit (17), welche die Antriebseinheit derart steuert, dass ein vertikaler Abstand (11) der mindestens zwei in vertikaler Richtung (6) beabstandet angeordnete Aufnahmeebenen (3, 4) verstellbar ist.

8. Verfahren zum Ein- und/oder Ausschleusen von Stückgut (2) in ein oder aus einem Querbandsortertransportelement (1) nach mindestens einem der voranstehenden Ansprüche,
bei dem Stückgut (2) in eine in einem vorgebbaren vertikalen Abstand (11) über einer unteren Aufnahmeebene (3) der mindestens zwei in vertikaler Richtung (6) beabstandet angeordneten Aufnahmeebenen (3, 4) angeordnete obere Aufnahmeebene (4) der mindestens zwei in vertikaler Richtung (6) beabstandet angeordneten Aufnahmeebenen (3, 4) eingeschleust und/oder ausgeschleust wird, und bei dem Stückgut (2) in eine zumindest annähernd auf eine vertikale Höhe der unteren Aufnahmeebene (3) der zwei in vertikaler Richtung (6) beabstandet angeordneten Aufnahmeebenen (3, 4) herabgesenkte obere Aufnahmeebene (4') eingeschleust und/oder ausgeschleust wird,
**dadurch gekennzeichnet, dass**
das Ein- und/oder Ausschleusen von Stückgut (2) in die oder aus der herabgesenkten oberen Aufnahmeebene (4') und das Ein- und/oder Ausschleusen von Stückgut (2) in die oder aus der untern Aufnahmeebene (3) unter Verwendung desselben Ein- und/oder Ausschleusemechanismus (5) erfolgt.

9. Verfahren zum Ein- und/oder Ausschleusen von Stückgut (2) nach Anspruch 8"
bei dem
zu einem Einschleusen und/oder Ausschleusen von Stückgut (2) in die oder aus der unteren Ebene (3) die herabgesenkte obere Aufnahmeebene (4') angehoben wird und/oder bei dem das Querbandsortertransportelement (1) gefördert wird, wobei beim Fördern die mindestens zwei in vertikaler Richtung (6) beabstandet angeordneten Aufnahmeebenen (3, 4) einen vorgebbaren vertikalen Abstand (11) aufweisen.

## Claims

1. Cross-belt sorter transport element (1) for a cross-belt sorter (10) having
at least two receiving planes (3, 4) arranged at a distance in the vertical direction (6) for receiving goods (2) during transportation of the goods (2), wherein a run-in and/or run-out mechanism (5) for running goods in and/or out of the lower plane is arranged in a lower receiving plane (3) of the at least two receiving planes (3, 4) arranged at a distance in the vertical direction (6),
**characterised in that**
an upper receiving plane (4) of the at least two receiving planes (3, 4) arranged at a distance in the vertical direction (6) can be lowered at least approximately onto a vertical height of the lower receiving plane (3) such that goods (2) can be run in and/or out of the lowered upper receiving plane (4') by using the run-in and/or run-out mechanism (5).

2. Transport element (1) according to claim 1,
**characterised in that**
the run-in and/or run-out mechanism is a band conveyor and the band conveyor has a drivable cross belt (12) or a number of cross belts (12) which are arranged in parallel to one another and can be driven separately in each case.

3. Cross-belt sorter transport element (1) according to one of the two preceding claims,
**characterised in that**
a receiving device (7) for goods (2) is arranged in the upper plane (4), wherein the receiving device (7) is a passive component.

4. Cross-belt sorter transport element (1) according to claim 3,
**characterised in that**
the passive component is a grate, a rack, a grid, a tray or a cross-belt which can be driven externally.

5. Cross-belt sorter transport element (1) according to claim 4, **characterised in that** the grate (7) has a pitch (13) adjusted to the cross belts (12) of the band conveyor.

6. Cross-belt sorter transport element (1) according to one of the preceding claims,
**characterised by**
an adjusting device (8), by means of which a vertical distance (11) of the two receiving planes (3, 4) can be adjusted and by means of which the upper receiving plane (4) can be lowered at least approximately onto the vertical height of the lower receiving plane (3).

7. Cross-belt sorter transport element (1) according to claim 6,
**characterised by**
a drive unit (16) which actuates the adjusting device (8) and/or a control unit (17) which controls the drive unit such that a vertical distance (11) of the at least two receiving planes (3, 4) arranged at a distance in the vertical direction (6) can be adjusted.

8. Method for running goods (2) in and/or out of a cross-belt sorter transport element (1) according to at least one of the preceding claims, in which goods (2) are run in and/or out of an upper receiving plane (4) of the at least two receiving planes (3, 4) arranged at a distance in the vertical direction (6), said upper receiving plane (4) being arranged at a predeterminable vertical distance (11) above a lower receiving plane (3) of the at least two receiving planes (3, 4) arranged at a distance in the vertical direction (6), and in which goods (2) are run in and/or out of an upper receiving plane (4') lowered at least approximately onto a vertical height of the lower receiving plane (3) of the two receiving planes (3, 4) arranged at a distance in the vertical direction (6),
**characterised in that**
the goods (2) are run in and/or out of the lowered upper receiving plane (4') and the goods (2) are run in or out of the lower receiving plane (3) by using the same run-in and/or run-out mechanism (5).

9. Method for running goods (2) in and/or out according to claim 8,
in which the lowered upper receiving plane (4') is raised in order to run goods (2) in and/or out of the lower plane (3) and/or in which the cross-belt sorter transport element (1) is conveyed, wherein during conveying the at least two receiving planes (3, 4) arranged at a distance in the vertical direction (6) have a predeterminable vertical distance (11).

## Revendications

1. Élément transporteur de trieuse à bande transversale (1) pour une trieuse à bande transversale (10) comprenant au moins deux niveaux de réception (3, 4) disposés à distance l'un de l'autre en direction verticale (6) pour la réception de marchandises de détail (2) pendant un transport des marchandises de détail (2), un mécanisme d'introduction et/ou de déchargement (5) étant agencé dans un niveau de réception inférieur (3) desdits au moins deux niveaux de réception (3, 4) disposés à distance l'un de l'autre en direction verticale (6), pour introduire et/ou décharger des marchandises de détail dans le niveau inférieur,
**caractérisé en ce que**
un niveau de réception supérieur (4) desdits au moins deux niveaux de réception (3, 4) disposés à distance l'un de l'autre en direction verticale (6) peut être abaissé au moins approximativement jusqu'à une hauteur verticale du niveau de réception inférieur (3) de sorte que des marchandises de détail (2), en utilisant le mécanisme d'introduction et/ou de déchargement (5), peuvent être introduites dans le niveau de réception supérieur abaissé (4') et/ou déchargées hors du niveau de réception supérieur abaissé (4').

2. Élément transporteur (1) selon la revendication 1,
**caractérisé en ce que**
le mécanisme d'introduction et/ou de déchargement est un convoyeur à courroie et le convoyeur à courroie comporte une bande transversale (12) pouvant être entraînée ou plusieurs bandes transversales (12) disposées parallèlement les unes aux autres, pouvant être entraînées chacune séparément.

3. Élément transporteur de trieuse à bande transversale (1) selon l'une des deux revendications précédentes,
**caractérisé en ce qu'**un dispositif de réception (7) pour marchandises de détail (2) est agencé dans le niveau supérieur (4), le dispositif de réception (7) étant un élément passif.

4. Élément transporteur de trieuse à bande transversale (1) selon la revendication 3,
**caractérisé en ce que** l'élément passif est une grille, un support, un treillis, une cuvette ou bien une bande transversale pouvant être entraînée séparément.

5. Élément transporteur de trieuse à bande transversale (1) selon la revendication 4,
**caractérisé en ce que**
la grille (7) présente un écartement (13) adapté aux bandes transversales (12) du convoyeur à courroie.

6. Élément transporteur de trieuse à bande transversale (1) selon l'une des revendications précédentes,
**caractérisé par**
un dispositif de réglage (8) au moyen duquel une distance verticale (11) entre les deux niveaux de réception (3, 4) peut être réglée et au moyen duquel le niveau de réception supérieur (4) peut être abaissé au moins approximativement jusqu'à la hauteur verticale du niveau de réception inférieur (3).

7. Élément transporteur de trieuse à bande transversale (1) selon la revendication 6,
**caractérisé par**
une unité d'entraînement (16) qui actionne le dispositif de réglage (8), et/ou une unité de commande (17) qui commande ladite unité d'entraînement de telle façon qu'une distance verticale (11) entre les au moins deux niveaux de réception (3, 4) disposés à distance l'un de l'autre en direction verticale (6) peut être réglée.

8. Procédé d'introduction et/ou de déchargement de marchandises de détail (2) dans ou hors d'un élément transporteur de trieuse à bande transversale (1) selon au moins l'une des revendications précédentes,
dans lequel des marchandises de détail (2) sont introduites dans et/ou déchargées hors d'un niveau de réception supérieur (4) des au moins deux niveaux de réception (3, 4) disposés à distance l'un de l'autre en direction verticale (6), lequel niveau supérieur (4) est disposé à une distance verticale (11) prédéfinissable au-dessus d'un niveau de réception inférieur (3) des au moins deux niveaux de réception (3, 4) disposés à distance l'un de l'autre en direction verticale (6), et dans lequel des marchandises de détail (2) sont introduites dans et/ou déchargées hors d'un niveau de réception supérieur (4') abaissé au moins approximativement jusqu'à une hauteur verticale du niveau de réception inférieur (3) des deux niveaux de réception (3, 4) disposés à distance l'un de l'autre en direction verticale (6),
**caractérisé en ce que**
l'introduction et/ou le déchargement de marchandises de détail (2) dans ou hors du niveau de réception supérieur abaissé (4') et l'introduction et/ou le déchargement de marchandises de détail (2) dans ou hors du niveau de réception inférieur (3) est réalisé en utilisant le même mécanisme d'introduction et/ou de déchargement (5).

9. Procédé d'introduction et/ou de déchargement de marchandises de détail (2) selon la revendication 8,
dans lequel, pour introduire ou décharger des marchandises de détail (2) dans ou hors du niveau inférieur (3), le niveau de réception supérieur abaissé (4') est remonté et/ou dans lequel l'élément transporteur de trieuse à bande transversale (1) est transporté, les au moins deux niveaux de réception (3, 4) disposés à distance l'un de l'autre en direction verticale (6) présentant pendant le transport une distance verticale (11) prédéfinissable.
